# EUROPEAN PATENT APPLICATION

(11) **EP 3 376 046 A1**
(43) Date of publication of application: **19.09.2018**
(21) Application number: 16864183.5
(22) Date of filing: 08.11.2016
(51) Int. Cl.: F04D 29/16, A47L 9/00, F04D 29/28, F04D 29/62

(54) **BLOWING DEVICE AND CLEANER**

(30) Priority: 09.11.2015 JP 2015219104
(71) Applicant: Nidec Corporation, Kyoto-shi, Kyoto 601-8205 (JP)
(72) Inventor: HAYAMITSU, Ryosuke, Kyoto-shi Kyoto 601-8205 (JP); MIYAMOTO, Yuzo, Kyoto-shi Kyoto 601-8205 (JP); UEDA, Satoshi, Kyoto-shi Kyoto 601-8205 (JP)
(74) Representative: Stöckeler, Ferdinand
(86) International application number: PCT/JP2016/083017
(87) International publication number: WO 2017/082222

(57) **Abstract**

An air blowing apparatus according to an exemplary embodiment of the present invention includes: a motor which includes a shaft disposed along a central axis extending vertically; an impeller which is fixed to the shaft; and an impeller cover which surrounds an upper side and an outer side in a radial direction of the impeller and which includes a suction inlet at a center, in which the impeller includes a plurality of movable vanes which are disposed in a circumferential direction, a lower shroud which is disposed on the lower side of the movable vanes, an upper shroud which is disposed on the upper side of the movable vanes and which includes a through hole penetrating in the axial direction, the upper shroud includes a first raised portion which protrudes upward from an upper surface of the upper shroud and which extends in the circumferential direction, a second raised portion which is disposed on the outer side in the radial direction of the first raised portion, which protrudes upward from the upper surface of the upper shroud, and which extends in the circumferential direction, and a clearance in the axial direction between a lower surface of the impeller cover and at least one of the first raised portion and the second raised portion is smaller than a clearance in the axial direction between the lower surface of the impeller cover and the upper shroud on the inner side in the radial direction of the first raised portion.

## Description

### Technical Field

The present invention relates to an air blowing apparatus and a vacuum cleaner.

### Background Art

A conventionally known air blowing apparatus includes an impeller. For example, Japanese Unexamined Patent Application Publication No. 2003-129995 discloses that an air blowing apparatus described therein is provided with an unbalanced member having an asymmetric mass distribution.

### Citation List

### Patent Literature

PTL 1: Japanese Unexamined Patent Application Publication No. 2003-129995

### Summary of Invention

### Technical Problem

Japanese Unexamined Patent Application Publication No. 2003-129995 discloses that in the air blowing apparatus, the unbalanced member having an asymmetric mass distribution is attached in a phase opposite to that of an unbalanced position of a rotor. However, in such an air blowing apparatus, it is difficult to reduce the clearance between a rotating fan and a fan cover and thereby to reduce the risk that the air discharged by the rotating fan flows into the clearance between the rotating fan and the fan cover.

In light of the above problem, an object of an exemplary embodiment of the present invention is to improve a labyrinth effect between an upper shroud and a lower surface of an impeller cover.

### Solution to Problem

An air blowing apparatus according to an exemplary embodiment of the present invention includes: a motor which includes a shaft disposed along a central axis extending vertically; an impeller which is fixed to the shaft; and an impeller cover which surrounds an upper side and an outer side in a radial direction of the impeller and which includes a suction inlet at a center, in which the impeller includes a plurality of movable vanes which are disposed in a circumferential direction, a lower shroud which is disposed on the lower side of the movable vanes, an upper shroud which is disposed on the upper side of the movable vanes and which includes a through hole penetrating in the axial direction, the upper shroud includes a first raised portion which protrudes upward from an upper surface of the upper shroud and which extends in the circumferential direction, a second raised portion which is disposed on the outer side in the radial direction of the first raised portion, which protrudes upward from the upper surface of the upper shroud, and which extends in the circumferential direction, and a clearance in the axial direction between a lower surface of the impeller cover and at least one of the first raised portion and the second raised portion is smaller than a clearance in the axial direction between the lower surface of the impeller cover and the upper shroud on the inner side in the radial direction of the first raised portion.

### Advantageous Effects of Invention

An exemplary embodiment of the present invention provides an air blowing apparatus which has an improved labyrinth effect between an upper shroud and a lower surface of an impeller cover, and a vacuum cleaner including the same.

### Brief Description of Drawings

[Fig. 1] Fig. 1 is a vertical cross-sectional view of an air blowing apparatus of a first embodiment.
[Fig. 2] Fig. 2 is a bottom view illustrating a motor cover and the like of the first embodiment.
[Fig. 3] Fig. 3 is a perspective view illustrating the motor cover and the like of the first embodiment.
[Fig. 4] Fig. 4 is a top view of an annular member of the first embodiment.
[Fig. 5] Fig. 5 is a top view of an impeller of the first embodiment.
[Fig. 6] Fig. 6 is a perspective view of the impeller of the first embodiment.
[Fig. 7] Fig. 7 is a bottom view of a rotor unit of a second embodiment.
[Fig. 8] Fig. 8 is a vertical cross-sectional view of an air blowing apparatus of a third embodiment.
[Fig. 9] Fig. 9 is a perspective view of an impeller of the third embodiment.
[Fig. 10] Fig. 10 is a plan view of the impeller of the third embodiment.
[Fig. 11] Fig. 11 is a perspective view of a vacuum cleaner.

### Description of Embodiments

Hereinafter, a description is provided for an air blowing apparatus according to embodiments of the present invention with reference to the drawings. In the following description, a direction in which a central axis J extends is defined as an axial direction. In addition, the upper side in the axial direction is simply referred to as the upper side, and the lower side in the axial direction is simply referred to as the lower side. Note that the axial direction, the upper and lower directions, the upper side, and the lower side are simply names used for the purpose of explanation and do not limit actual positional relationship or directions. Additionally, a direction parallel to the central axis J is simply referred to as the "axial direction," a radial direction centered at the central axis J is simply referred to as the "radial direction," and a circumferential direction centered at the central axis J is simply referred to as the "circumferential direction," unless otherwise noted. Note that in the following description, hatching in cross-sections is omitted for convenience.

### <First Embodiment>

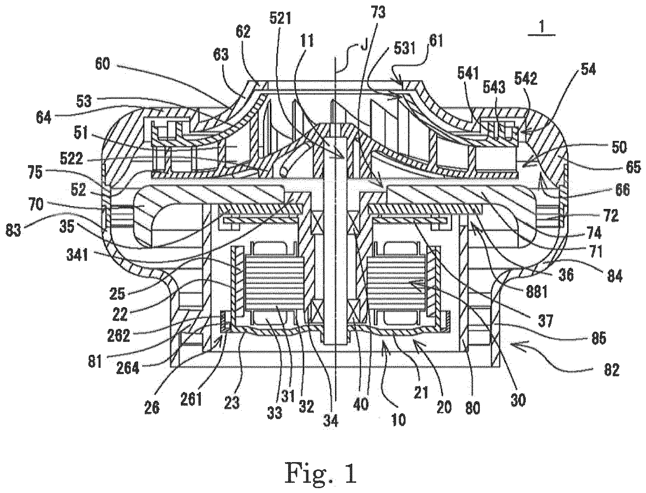

Hereinafter, a description is provided for an air blowing apparatus 1 according to an exemplary first embodiment of the present invention. Fig. 1 is a vertical cross-sectional view of the air blowing apparatus 1 of the first embodiment. The air blowing apparatus 1 includes a motor 10 and an impeller 50.

The motor 10 includes a shaft 11 which is disposed along the central axis J extending vertically. The motor 10 includes a rotor unit 20, a stator unit 30, and bearings 40. Each of the bearings 40 supports the shaft 11 such that the shaft 11 can rotate relative to the stator unit 30.

### <Rotor Section>

The rotor unit 20 includes a lidded cylindrical rotor holder 21 which is fixed to the shaft 11 and which is opened upward. In the present embodiment, the rotor holder 21 is directly fixed to the shaft 11. Note that the rotor holder 21 may be fixed to the shaft 11 by the intermediary of another member.

The rotor holder 21 includes a rotor holder cylindrical portion 22, a rotor holder bottom portion 23, and a lower side balance correcting portion 24. The rotor holder cylindrical portion 22 is a tubular portion which extends in the axial direction. An inner circumferential surface of the rotor holder cylindrical portion 22 has a magnet 25 fixed thereto. The magnet 25 is cylindrical.

The rotor holder bottom portion 23 is located on the lower side of the rotor holder cylindrical portion 22. To be more precise, the rotor holder bottom portion 23 is a substantially plate-shaped portion which extends inwardly from the lower end of the rotor holder cylindrical portion 22.

The rotor holder 21 includes the lower side balance correcting portion 24. The lower balance correcting portion 24 is included in at least one of the rotor holder cylindrical portion 22 and the rotor holder bottom portion 23. In the present embodiment, the lower side balance correcting portion 24 is located outside the rotor holder cylindrical portion 22. However, the lower side balance correcting portion 24 may be included in a portion of the rotor holder bottom portion 23.

### <Stator Section>

The stator unit 30 faces the rotor unit 20 in the radial direction. The stator unit 30 includes a stator core 31, and a coil 33 is formed by winding lead wire around the stator core 31 using an insulator 32. In the present embodiment, the motor 10 is what is called an outer rotor type. Thus, the stator core 31 is located on the inner side of the magnet 25 fixed to the inner circumferential surface of the rotor holder cylindrical portion 22 with a clearance in the radial direction in between.

The stator unit 30 includes a bearing housing 34, an attachment plate 35, and a circuit board 37. The bearing housing 34 is a tubular member which extends in the axial direction. The bearing housing 34 has a tubular shape for holding the bearings 40 on the inner surface thereof. In the present embodiment, each of the bearings 40 is a ball bearing. Note that the bearing 40 may be, for example, a plain bearing.

The attachment plate 35 is located on the upper side of the rotor holder 21 and the stator core 31. The attachment plate 35 spreads on the outer side of the bearing housing 34 and in a direction perpendicular to the shaft 11. At least a portion of the inner side of the attachment plate 35 is fixed to the bearing housing 34. The attachment plate 35 is formed of a member made of metal. The attachment plate 35 includes an attachment plate flange portion 36 which protrudes from an outer edge in the radial direction. In the present embodiment, three of the attachment plate flange portions 36 are formed in the circumferential direction.

The motor 10 further includes a circuit board 37 which is located on the lower side of the attachment plate 35 and on the upper side of the rotor holder 21. The circuit board 37 spreads on the outer side of the bearing housing 34 and in a direction perpendicular to the shaft 11. In other words, the outer end of the circuit board 37 is located on the outer side of the outer end of the bearing housing 34. The inner end of the circuit board 37 is fixed to the bearing housing 34. The circuit board 37 includes a lead line 38 which is electrically connected to an external power supply. In addition, a pullout line pulled out from the coil 32 formed in the stator core 31 is electrically connected to the circuit board 37. The electrical connection between the circuit board 37 and the pullout line is established by, for example, solder joint.

### <Impeller>

The air blowing apparatus 1 includes an impeller 50 which is located on the upper side of the motor 10. The impeller 50 is fixed to the shaft 11. Thus, when the motor 10 fixed to the shaft 11 rotates, the impeller 50 fixed to the shaft 11 also rotates about the central axis J together with the shaft 11. An impeller cover 60 surrounds the upper side and the outer side in the radial direction of the impeller 50.

The impeller 50 includes multiple movable vanes 51, a lower shroud 52, an upper shroud 53, and an upper side balance correcting portion 54. The upper side balance correcting portion 54 is included in the upper shroud 53. To be more precise, the upper side balance correcting portion 54 is located in a region on the outer side of the upper surface of the upper shroud 53.

The multiple movable vanes 51 are disposed in the circumferential direction. In other words, the impeller 50 includes multiple movable vanes 51 disposed in the circumferential direction. In the present embodiment, all of the multiple movable vanes 51 have the same shape. To be more specific, the movable vanes 51 are of a single type. However, the multiple movable vanes 51 may have different shapes. For example, some of the movable vanes may have a length long in the radial direction, while the other movable vanes may have a length short in the radial direction.

The lower shroud 52 is located on the lower side of the movable vanes 51. In other words, the impeller 50 includes a lower shroud 52 disposed on the lower side of the movable vanes 51. The lower portions of the multiple movable vanes 51 are connected to the lower shroud 52. The inner side of the lower shroud 52 has a through hole 521 vertically penetrating therethrough, and the shaft 11 is press-fitted to the through hole 521 and then is fixed. Note that the shaft 11 may be fixed to the lower shroud 52 by means other than press fitting. In the present embodiment, the upper surface of the lower shroud 52 is located highest at the central portion and smoothly descends toward the outside. This improves air blow efficiency of the impeller 50 because air flowing from the upper side is guided toward the outer side in the radial direction along the upper surface of the lower shroud 52. Note that the lower shroud 52 has a different shape, for example a flat-plate shape spreading in a direction perpendicular to the shaft 11.

The inner side of the lower surface of the lower shroud 52 is located on the upper side of any other portion of the lower surface of the lower shroud 52. The lower surface of the lower shroud 52 has a shape smoothly descending from the inner side toward the outer side. The lower shroud 52 includes multiple lower shroud ribs 522 which are disposed on the lower surface in the circumferential direction. The position in the axial direction of the lower end of the lower shroud ribs 522 is substantially the same as the position in the axial direction of the outer edge of the lower shroud 52. Note that the lower end of the lower shroud 52 may be located on the upper side of the outer edge of the lower shroud 52. The lower shroud ribs 522 are located on the back side in the rotational direction R of the impeller from the inner side toward the outer side. This makes it possible to discharge air located between the lower shroud 52 and the upper surface of a diffuser 70 to be described later to the outside because when the impeller 50 rotates, the lower shroud ribs 522 also rotate together. In addition, if the lower shroud ribs 522 are formed, the rigidity of the impeller 50 improves.

The upper shroud 53 is located on the upper side of the movable vanes 52. The upper shroud 53 has a through hole 531 penetrating in the axial direction. To be more precise, the impeller 50 includes an upper shroud 53 which is disposed on the upper side of the movable vanes 51 and which has a through hole 531 penetrating in the axial direction. The upper portions of the multiple movable vanes 52 are connected to the upper shroud 53. The through hole 531 penetrating in the axial direction is formed in the central portion of the upper shroud 53. Thus, air suctioned from the upper side of the impeller 50 is suctioned via the through hole 531 of the upper shroud 53 into the impeller 50. The upper shroud 53 has a shape smoothly descending from the inner end toward the outer side. Therefore, air suctioned into the impeller 50 is guided to smoothly descend toward the outer side along the lower surface of the upper shroud 53 and the upper surface of the lower shroud 52.

### <Impeller Cover>

The impeller cover 60 surrounds the upper side and the outer side in the radial direction of the impeller 50. In addition, the impeller cover 60 includes a suction inlet 61 at the center. This makes it possible to suction air on the upper side of the air blowing apparatus 1 via the suction inlet 61 into the air blowing apparatus 1. The air suctioned via the suction inlet 61 passes via the through hole 531 formed in the upper shroud 53 and is taken into the impeller 50.

The impeller cover 60 includes an impeller cover upper edge portion 62 which forms the suction inlet 61, an impeller cover slope 63 which spreads and smoothly descends from the outer side of the impeller cover upper edge portion 62 toward the outside, an impeller cover raised portion 64 which protrudes upward from the outer side of the impeller cover slope 63, and an impeller cover tubular portion 65 which extends downward from the outer side of the impeller cover raised portion 64.

The lower surface of the impeller cover slope 63 faces the upper surface of the upper shroud 53 with a clearance in between. The clearance formed between the lower surface of the impeller cover slope 63 and the upper surface of the upper shroud 53 is substantially uniform. This makes it possible to suppress the reduction in air blow efficiency of the air blowing apparatus 1 attributed to inflow of air between the impeller cover slope 63 and the upper shroud 53.

The impeller cover raised portion 64 is a portion which protrudes upward from the outer side of the impeller cover slope 63. The impeller cover raised portion 64 is formed annularly centered at the central axis J. The lower surface of the impeller cover raised portion 64 is located higher than the outer side of the lower surface of the impeller cover slope 63. To be more specific, within a region where the impeller cover raised portion 64 is located, the lower surface of the impeller cover 60 is recessed upward. The space formed on the lower side of the impeller cover raised portion 64 contains the upper side balance correcting portion 54 located therein.

The inner surface of the impeller cover tubular portion 65 spreads from the outer side of the outer end of the impeller 50 and descends toward the outside, forming a smooth surface. Thus, the air discharged from the impeller 50 is guided to smoothly descend toward the outside. In the present embodiment, the inner surface of the impeller cover tubular portion 65 includes an impeller cover guide portion 66 which is raised inward and downward and is located on the lower side of the lower end of the upper shroud 53. The impeller cover guide portion 66 and a diffuser flat plate portion 71 to be described later face each other with a clearance in between. The clearance described above has a portion narrowest at a position in the axial direction which is almost the same as that of or is on the lower side of the upper surface of the lower shroud 52. This makes it possible to temporarily raise the static pressure of the air discharged from the impeller 50 and to improve the air blow efficiency of the air blowing apparatus 1.

### <Diffuser>

The air blowing apparatus 1 further includes a diffuser 70 at least a portion of which is located on the upper side of the stator unit 30. The diffuser 70 includes a diffuser flat plate portion 71 and upper side static vanes 72. The diffuser flat plate portion 71 spreads in a direction perpendicular to the shaft 11. The diffuser flat plate portion 71 is located on the upper side of the stator unit 30 and is located on the lower side of the lower shroud 52. The upper surface of the diffuser flat plate portion 71 faces the lower surface of the lower shroud 52 in the axial direction with a clearance in between.

The diffuser 70 is fixed to the stator unit 30 on the lower side of the impeller cover 60. To be more specific, the attachment plate 35 is fixed to the diffuser 70. To sum up, the lower surface of the diffuser flat plate portion 71 is foxed to the attachment plate flange portion 36. This makes it possible to precisely fasten the diffuser 70 and the stator unit 30 together. Since the attachment plate 35 is a flat plate shaped metal member spreading in a direction perpendicular to the shaft 11, when the upper surface of the attachment plate flange portion 36 and the lower surface of the diffuser flat plate portion 71 come into surface contact with each other, it is possible to precisely fix the attachment plate 35 and the diffuser flat plate portion 71 together in a direction perpendicular to the shaft 11. Note that the attachment plate 35 or the diffuser 70 may be a member formed of a different material.

The diffuser 70 has a diffuser through hole 73 penetrating in the axial direction. To be more specific, a substantially circular through hole 73 centered at the central axis J is formed in the center of the diffuser flat plate portion 71. At least a portion of the bearing housing 34 is fitted into the diffuser through hole 73. This makes it possible to improve coaxiality of the bearing housing 34 and the diffuser 70. In the present embodiment, a fitting portion 341 fitted to the diffuser through hole 73 is formed on the outer side above the bearing housing 35. In the present embodiment, the fitting portion 341 is partially fitted and thus can be fixed to the edge of the diffuser through hole 73 while improving the coaxiality of the bearing housing 34 and the diffuser 70. Note that the diffuser 70 and the stator unit 30 may be fixed by a different structure. For example, a portion of the bearing housing 34 and a portion of the diffuser 70 may be strongly fixed together, and the attachment plate 35 and the diffuser 70 may be distant from each other.

The diffuser 70 includes a tubular shaped diffuser tubular portion 74 which extends downward from the outer side of the diffuser flat plate portion 71. The multiple upper side static vanes 72 disposed in the circumferential direction are located on the outer surface of the diffuser tubular portion 74. In other words, the diffuser 70 includes the multiple upper side static vanes 72. The multiple upper side static vanes 72 are disposed in the circumferential direction and on the outer side of the diffuser flat plate portion 71. The outer side of the upper side static vanes 72 is connected to a middle cover 75 extending in the shape of a tube.

The upper portion of the middle cover 75 is connected to the lower portion of the impeller cover tubular portion 65. The upper side static vanes 72 are located on the outer side of and the lower side of the outer end of the impeller 50. Thus, the air guided in the impeller cover 60 passes through a flow path formed by the outer surface of the diffuser tubular portion 74 and the inner surface of the middle cover 75 and is discharged downward. At that moment, the upper side static vanes 72 disposed in the flow path can guide the air flowing in the flow path smoothly toward the lower side. Thus, it is possible to improve the air blow efficiency of the air blowing apparatus 1. In the present embodiment, the diffuser flat plate portion 71, the upper side static vanes 72, and the middle cover 75 form a single member made of resin. Note that the diffuser flat plate portion 71, the upper side static vanes 72, and the middle cover 75 may be separate members. In addition, the middle cover 75 and the impeller cover 60 may form a single unit. To be more specific, the impeller cover tubular portion 65 may extend downward over a length longer than Fig. 1 such that the lower end of the impeller cover tubular portion 65 is located below the region where the upper side static vanes 72 are located.

### <Motor Cover>

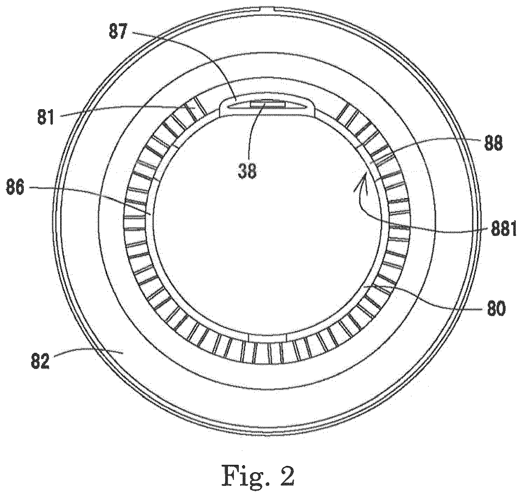

Fig. 2 is a bottom view illustrating a motor cover 80 and the like. As illustrated in Figs. 1 and 2, the air blowing apparatus 1 includes the motor cover 80. The motor cover 80 is located on the lower side of the impeller cover 60 and is located on the outer side in the radial direction of the motor 10. In addition, the motor cover 80 has a tubular shape extending in the axial direction and opened downward.

In the present embodiment, lower side static vanes 81 and a blower case 82 are disposed on the outer side of the motor cover 80. The lower static vanes 81 are static vanes disposed on the outer surface of the motor cover 80 at equal intervals in the circumferential direction. The outer side of the lower side static vanes 81 is connected to the blower case 82. The blower case 82 has a tubular shape extending in the axial direction. The upper portion of the blower case 82 is connected to the lower portion of the middle cover 75. The motor cover 80 and the blower case 82 face each other in the radial direction with a clearance in between and form a flow path which allows air discharged through the upper side static vanes 72 to flow. Note that in the present embodiment, the motor cover 80, the lower side static vanes 81, and the blower case 82 form a single member made of resin. However, the motor cover 80, the lower side static vanes 81, and the blower case 82 may be separate members.

The blower case 82 includes a blower case outer tubular portion 83, a blower case connection portion 84, and a blower case inner tubular portion 85. The blower case outer tubular portion 83 is a tubular portion which is connected to the lower portion of the middle cover 75 and which extends downward in the axial direction from the lower portion of the middle cover 75. The lower portion of the blower case outer tubular portion 83 is smoothly curved toward the inner side and is connected to the blower case connection portion 84. The blower case connection portion 84 is a portion which is smoothly curved downward toward the inner side. The inner side of the blower case connection portion 84 is connected to the blower case inner tubular portion 85. The blower case outer tubular portion 83 is a tubular portion which is connected to the lower portion of the blower case connection portion 84 and which extends downward.

Since the blower case 82 has the above structure, the air discharged downward from the upper side static vanes 72 flows downward along the flow path formed on the inner side of the blower case outer tubular portion 83, flows inward along the inner side of the blower case connection portion 84, and flows downward along the inner side of the blower case inner tubular portion 85. Here, if the air blowing apparatus 1 of the present embodiment is mounted on a vacuum cleaner, for example, the air suctioned through the suction inlet 61 may contain trash or water. In that case, it is necessary that the trash or water do not come into contact with the motor. Since the motor cover 80 is disposed on the outer side of the motor 10 in the air blowing apparatus 1, trash or water contained in the suctioned air does not intrude into the motor cover 80. This makes it possible for trash or water not to come into contact with the motor 10.

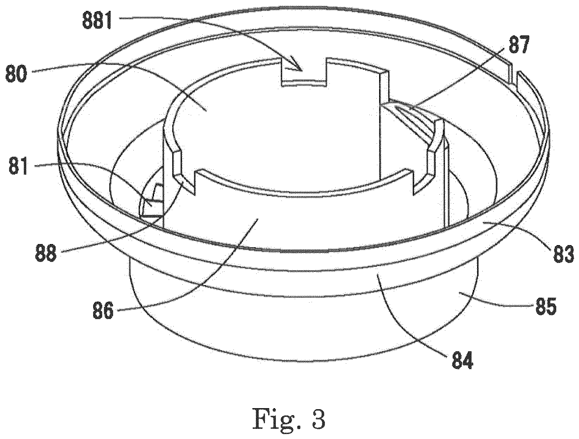

Fig. 3 is a perspective view illustrating the motor cover 80 and the like. The motor cover 80 includes at least one lead line holder 87 in the circumferential direction. Thus, the motor cover 80 includes a tubular shaped motor cover tubular portion 86 and the lead line holder 87. The lead line 38 is held by the lead line holder 87. In the present embodiment, the lead line holder 87 is a through hole which is formed in a portion of the motor cover 80 and which penetrates in the axial direction. The outer end of the lead line holder 87 is located on the outer side of the outer end of the motor cover tubular portion 86, and the inner end of the lead line holder 87 is located on the inner side of the inner end of the motor cover tubular portion 86. To be more specific, in the motor cover 80, the lead line holder 87 is a through hole penetrating in the axial direction and has a shape more bulging in the radial direction than the motor cover tubular portion 86 does. This makes it possible to hold the lead line 38. If there is not lead line holder 87 and the lead line 38 extends downward from the circuit board 37, the lead line 38 vibrates due to the air flowing in the air blowing apparatus 1. On the other hand, in the present embodiment, the lead line holder 87 provided makes it possible to suppress large vibration of the lead line 38.

Since the outer end of the lead line holder 87 more bulges outward than the motor cover tubular portion 86 does, the width in the radial direction of the flow path formed by the motor cover 80 and the blower case 82 is narrower on the outer side of the lead line holder 87 than the outer side of the motor cover tubular portion 86. In addition, the lower side static vanes 81 are not disposed on the outer side of the lead line holder 87. It is desirable that the flow path have an axially symmetric shape in the flow of air in the flow path. In that case, the area of the cross-section of the flow path is axially symmetric centered at the central axis J and thus the pressure distribution of the air or the resistance applied to the air is nearly axially symmetric. As a result, the air blow efficiency improves. On the other hand, since the lead line holder 87 is provided in the present embodiment, the flow path is narrow on the outer side of the lead line holder 87 when viewed in the axial direction. Hence, if the lower side static vanes 81 are not disposed on the outer side of the lead line holder 87, it is possible to increase the area of the cross-section of the flow path compared to the case of providing the lower side static vanes 81. Therefore, when the air is flowing in the flow path, it is possible to establish nearly the same conditions of pressure or resistance force applied to the air on the outer side of the motor cover tubular portion 86 and on the outer side of the lead line holder 87. Consequently, the air blow efficiency of the air blowing apparatus 1 improves. Note that since the lead line holder 87 may have a different shape or configuration, the area of the cross-section of the flow path and the pressure distribution may be adjusted by appropriately choosing a structure different from the above structure when fabricating the lead line holder 87 having a structure other than that of the present embodiment.

Note that the lead line holder 87 may have a different shape. For example, the inner surface of the motor cover 80 may have a hook and a portion of the lead line 38 may be fixed to the hook. In addition, the lead line holder 87 may be provided on the lower surface of the diffuser 70 and may extend outward along the diffuser 70, may be fixed to a portion of the upper side static vanes 71, and may be pulled out to the outside of the air blowing apparatus 1. The upper end of the lead line holder 87 is located on the lower side of the upper end of the motor cover tubular portion 86. To be more precise, the upper surface of the motor cover tubular portion 86 has a motor cover cutout portion 88 which is recessed downward, and the upper end of the lead line holder 87 corresponds to the motor cover cutout portion 88.

The upper surface of the motor cover tubular portion 86 includes the motor cover cutout portion 88 which is recessed downward. A plurality of the motor cover cutout portions 88 are disposed in the circumferential direction. The attachment plate flange portion 36 is disposed on the upper side of the motor cover cutout portions 88. In the present embodiment, the attachment plate flange portion 36 and each of the motor cover cutout portions 88 face each other with a clearance in the axial direction in between. In short, each of the motor cover cutout portions 88 forms a communication path 881 which establishes communication between the inside and the outside of the motor cover 80.

In the air blowing apparatus 1, the impeller cover 60, the middle cover 75, and the blower case 82 form the outer surface of the air flow path as in Fig. 1. However, the outer surface of the flow path need not be formed by three members and may be formed only by the impeller cover 60, for example. To be more specific, the length in the axial direction of the impeller cover 60 may be longer than that illustrated in Fig. 1, and the impeller cover tubular portion 65 may have substantially the same diameter and have a shape extending downward. In the air blowing apparatus having this configuration, the air discharged from the impeller is smoothly guided downward. Thus, the air blow efficiency improves.

On the other hand, in the air blowing apparatus 1, the air flowing in the flow path is guided inward by the blower case connection portion 84. By this configuration, the flow path can be closer to the motor case 80. A portion of the air flowing downward in the flow path flows through the lower portion of the motor case 80 into the motor case 80, and then flows upward inside the motor case 80. Hence, it is possible to cool the motor 10. The air cools the motor 10, and then flows through the communication path 881, is discharged to the outside of the motor case 80, and again flows downward outside the motor case 80.

Note that in the air blowing apparatus 1 of the first embodiment, the movable vanes 51, the upper side static vanes 72, and the lower side static vanes 81 are all different in number from one another. Generally, in the air blowing apparatus, noise and vibration occurs in the air blowing apparatus while the impeller is rotating. Noise and vibration can be amplified particularly in the case where the number of movable vanes and the number of static vanes are the same or where the number of one type is a multiple of the number of another type. On the other hand, in the air blowing apparatus 1, the number of movable vanes 51, the number of upper side static vanes 72, and the number of lower side static vanes 81 are mutually prime. Hence, noise and vibration are not amplified as described above. Moreover, in the air blowing apparatus 1, the number of movable vanes 51, the number of upper side static vanes 72, and the number of lower side static vanes 81 are all different prime numbers. Therefore, noise and vibration are further reduced.

### <Lower Side Balance Correcting Portion>

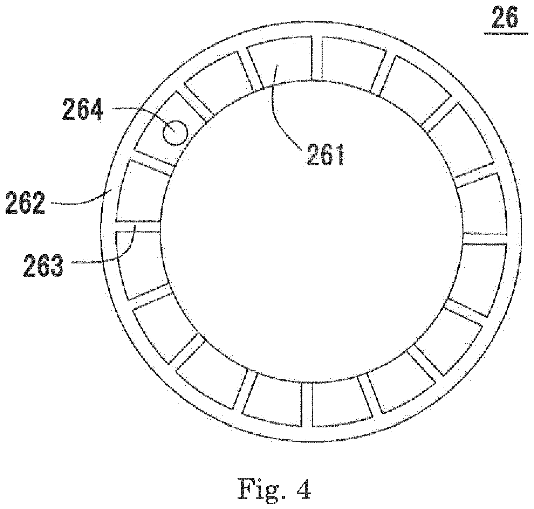

The lower side balance correcting portion 24 is formed on the outer side in the radial direction of the motor 10. In the present embodiment, the lower side balance correcting portion 54 is formed by an annular member 26 fixed to the outer surface of the rotor holder cylindrical portion 22. If the lower side balance correcting portion 24 is formed on the outer side in the radial direction of the motor 10, the work of balance correction becomes easy. Fig. 4 is a top view of the annular member 26. As illustrated in Figs. 1 and 4, the annular member 26 includes an annular member bottom portion 261, an annular member tubular portion 262, and multiple annular member wall portions 263. The annular member 26 is a resin member separate from the rotor holder 21. The annular member 26 if fixed to the lower side of the outer circumferential surface of the rotor holder cylindrical portion 22.

The annular member bottom portion 261 is an annular portion centered at the central axis J. The inner end of the annular member bottom portion 261 is fixed to the outer circumferential surface of the rotor holder cylindrical portion 22. The annular member tubular portion 262 has a tubular shape extending upward from the outer edge of the annular member bottom portion 261. Each of the annular member wall portions 263 is a portion extending inward from the inner surface of the annular member tubular portion 262. The inner end of the annular member wall portion 263 comes into contact with the outer surface of the rotor holder cylindrical portion 22. In this configuration, the rotor holder cylindrical portion 22 and the annular member 26 form multiple spaces which are opened upward and partitioned in the circumferential direction. In the case of correcting the balance of the assembly of the motor 10 and the impeller 50, it is possible to correct the mass distribution of the assembly relative to the central axis J by providing a weight 264 in at least one of the multiple spaces described above. Thus, the rotational balance of the assembly is corrected. Note that compared to the case of providing the lower side balance correcting portion 24 on the inner surface of the rotor holder cylindrical portion 22, the workability of balance correction improves in the present embodiment because the lower side balance correcting portion 24 can be provided on the outer side of the rotor holder cylindrical portion 22. Note that in the present embodiment, lower side balance correcting portion 24 is formed by the annular member 26 but may be formed by a different member or method.

### <Upper Side Balance Correcting Portion>

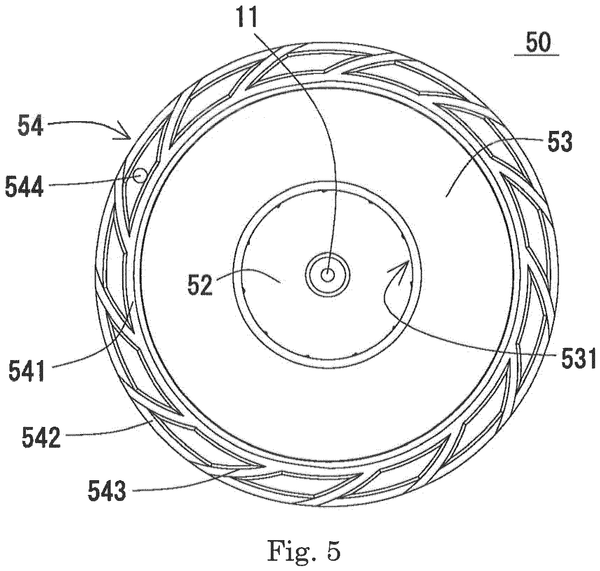

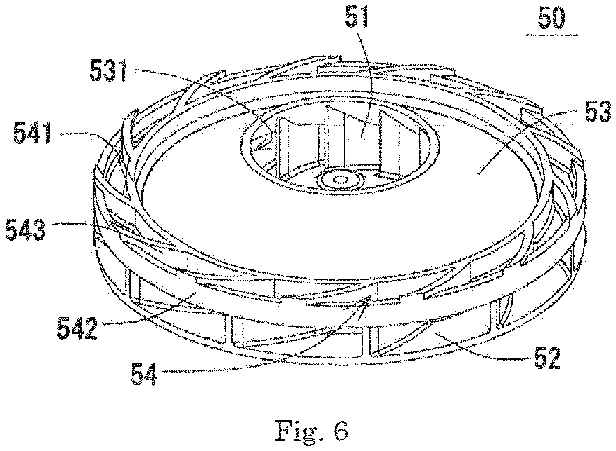

Fig. 5 is a top view of the impeller 50, and Fig. 6 is a perspective view of the impeller 50. As illustrated in Figs. 1, 5, and 6, the impeller 50 includes an upper side balance correcting portion 54. In the present embodiment, the upper side balance correcting portion 54 is formed in the upper surface of the upper shroud 53. The upper shroud 53 includes a first raised portion 541, a second raised portion 542, and upper shroud wall portions 543. The first raised portion 541 is an annular portion protruding upward from the upper surface of the upper shroud. The second raised portion 542 is an annular portion protruding upward from the upper surface of the upper shroud. The second raised portion 542 is located on the outer side of the first raised portion 541. In other words, the upper shroud 53 includes: the first raised portion 541 which protrudes upward from the upper surface of the upper shroud 53 and which extends in the circumferential direction; and the second raised portion 542 which is located on the outer side in the radial direction of the first raised portion 541, which protrudes upward from the upper surface of the upper shroud 53, and which extends in the circumferential direction. The clearance in the axial direction between the lower surface of the impeller cover 60 and at least one of the first raised portion 541 and the second raised portion 542 is smaller than the clearance in the axial direction between the lower surface of the impeller cover 60 and the upper shroud 53 on the inner side in the radial direction of the first raised portion 541. This makes it possible to suppress inflow of the air, discharged by the impeller 50 to the outside in the radial direction, into the space between the upper shroud 53 and the lower surface of the impeller cover 60. Thus, the air blow efficiency of the air blowing apparatus 1 improves. In the present embodiment, second raised portion 542 is disposed on the outer edge of the upper shroud. This makes it possible to further suppress inflow of the air, discharged by the impeller 50 to the outside in the radial direction, into the space between the upper shroud 53 and the lower surface of the impeller cover 60. The multiple upper shroud wall portions 543 are disposed in the circumferential direction and connect the first raised portion 541 and the second raised portion 542 together. To be more precise, the upper shroud 53 includes multiple upper shroud wall portions 432 which are disposed in the circumferential direction and which connect the first raised portion 541 and the second raised portion 542 together. In this way, it is possible to improve the rigidity of the upper shroud 53.

The above configuration forms multiple spaces in the circumferential direction in the upper surface of the upper shroud 53 which are open upward and which are partitioned by the first raised portion 541, the second raised portion 542, and the upper shroud wall portions 543. In other words, the upper shroud 53 includes multiple upper side balance correcting portions 54 which are formed by the first raised portion 541, the second raised portion 542, and the multiple upper shroud wall portions 543. At least one of the upper side balance correcting portions 54 is provided with a weight 544. To sum up, in the case of correcting the balance of the assembly of the motor 10 and the impeller 50, it is possible to correct the mass distribution of the assembly relative to the central axis J by providing a weight 544 in at least one of the multiple spaces described above. Thus, the rotational balance of the assembly is corrected. Note that in the present embodiment, it is possible to easily correct the balance even after the assembly is built because the upper side balance correcting portions 54 are formed in the upper surface of the upper shroud 53. In short, the workability of correcting the balance of the assembly improves.

The upper end of the first raised portion 541 is disposed higher than the upper end of the second raised portion 542. In other words, the first raised portion 541 protrudes higher than the second raised portion 542. If the second raised portion 542 is provided, it is possible to reduce the risk that a portion of the air discharged to the outside of the impeller 50 could flow onto the upper surface of the upper shroud 53. In addition, since first raised portion 541 protrudes higher than the second raised portion 542, it is possible to reduce the risk that the air inside the spaces formed by the first raised portion 541, the second raised portion 542, and the upper shroud wall portion 543 could flow inward beyond the first raised portion 542. Moreover, the air tends to flow outward beyond the first raised portion 541 rather than to flow inward beyond the second raised portion 542. In other words, since the upper end of the first raised portion 541 is located higher than the upper end of the second raised portion 542, the labyrinth characteristic between the impeller cover 60 and the upper surface of the upper shroud 53 improves.

The inner end of each of the upper shroud wall portions 543 is located in front of the corresponding outer end of the upper shroud wall portion 543 in the rotational direction R of the impeller. In other words, the inner end in the radial direction of each upper shroud wall portion 543 is disposed in front of the outer end in the radial direction of that upper shroud wall portion 543 in the rotational direction R of the impeller. As illustrated in Figs. 5 and 6, from the inner side toward the outer side, each upper shroud wall portion 543 is smoothly curved toward rear in the rotational direction R of the impeller. To be more precise, each upper shroud wall portion 543 has a shape similar to that of each movable vane 51. When the impeller 50 rotates, the upper shroud wall portions 543 also rotate together with the impeller 50, and each of the upper shroud wall portions 543 serves as a movable vane. In this way, it is possible to discharge the air located in the spaces formed between the impeller cover 60 and the upper surface of the upper shroud 53 to the outside. In addition, it is possible to reduce the risk that the air discharged by the impeller 50 to the outside could flow onto the upper surface of the upper shroud 53. To put it differently, when the upper shroud wall portions 543 rotate together with the impeller 50, the upper shroud wall portions 543 are given a labyrinth function. Moreover, since the upper end of the first raised portion 541 is located higher than the upper end of the second raised portion 542, the air located between the first raised portion 541 and the second raised portion 542 is more easily discharged to the outside. Here in the present embodiment, from the inner side toward the outer side, each upper shroud wall portion 543 is smoothly curved toward rear in the rotational direction R of the impeller. However, the upper shroud wall portion 543 may have a different shape. For example, from the inner side toward the outer side, the upper shroud wall portion 543 may be a flat plate shaped portion located rear in the rotational direction R of the impeller. In addition, the height in the axial direction of the upper end of the upper shroud wall portion 543 is equal to the height in the axial direction of the upper end of the first raised portion 541. Thus, if the upper shroud wall portion 543 is higher, it is possible to more efficiently discharge the air in the spaces formed between the impeller cover 60 and the upper surface of the upper shroud 53 to the outside.

The number of upper shroud wall portions 543 and the number of movable vanes 51 are different from each other. Thus, the number of hissing noises produced from the movable vanes 51 differs from the number of hissing noises produced from the upper shroud wall portions 543 over the period of one rotation of the impeller 50 about the central axis J. As a consequence, it is possible to reduce the risk that the hissing noise of the movable vanes 51 and the hissing noise of the upper shroud wall portion 543 occur at the same time to produce a loud noise.

At least one of the upper shroud wall portions 543 is disposed between adjacent movable vanes 51 in the circumferential direction. To put it differently, at least one of the outer ends in the radial direction of the upper shroud wall portions 543 is disposed in the circumferential direction between the outer end in the radial direction of a movable vane 51 and the outer end in the radial direction of a movable vane 51 adjacent to that movable vane 51. Thus, the upper shroud wall portions 543 and the movable vanes 51 are disposed at different positions in the circumferential direction. Hence, the balance of the upper shroud 53 is enhanced and the rigidity as a whole improves in a well balanced manner. In addition, when the impeller 50 rotates, hissing noise by the upper shroud wall portions 543 and hissing noise by the movable vanes 51 are prevented from occurring at a particular location in the circumferential direction. Therefore, it is possible to reduce the noise by the impeller 50.

Note that in the present embodiment, the impeller 50 includes the upper side balance correcting portion 54, and the rotor holder 21 includes the lower side balance correcting portion 24. This makes it possible to correct the balance at two locations of the assembly of the impeller 50 and the motor 10 after the assembly is built. Here, in the present embodiment, the lower side balance correcting portion 24 is formed on the lower side of the rotor holder 21, and the upper side balance correcting portion 54 is formed on the upper surface of the upper shroud 53. For this reason, it is easy to correct the balance of the assembly even after the diffuser 70 is fixed to the motor 10. Moreover, in the present embodiment, the motor cover 80 is opened downward. In other words, the motor cover 80 is tubular and does not have a structure to close the lower side thereof. This makes it possible to correct the balance using the lower side balance correcting portion 24 even after the motor cover 80 is built in.

In the present embodiment, the upper side balance correcting portion 54 is formed by the first raised portion 541, the second raised portion 542, and the upper shroud wall portions 543 formed on the upper surface of the upper shroud 53, and the weight 544 disposed on the upper surface of the upper shroud 53 corrects the balance. However, the upper side balance correcting portion 54 may have a different configuration. For example, a so-called minus balance mechanism may be employed in which a portion of the outer edge of the upper shroud 53 is cut out to adjust the weight of the impeller 50 and thus the balance of the assembly of the impeller 50 and the motor 10 is corrected. In that case, the shape of the upper side balance correcting portion 54 is asymmetric with respect to the central axis J. This makes it possible to correct the balance of the impeller 50.

### <Second Embodiment>

Next, a description is provided for an air blowing apparatus 1A according to an exemplary second embodiment of the application of the present invention. In the description of the air blowing apparatus 1A according to the second embodiment, the same explanation as that of the air blowing apparatus 1 of the first embodiment is omitted. In addition, the parts and the members having the same configurations as those of the first embodiment are given the same reference signs as those of the first embodiment.

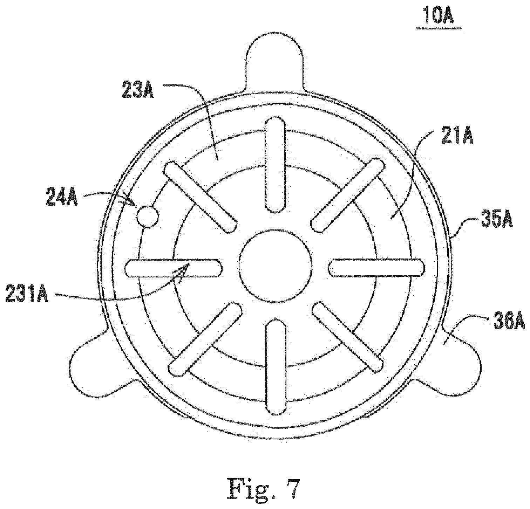

Fig. 7 is a bottom view of a rotor unit 20A of the air blowing apparatus 1A according to the second embodiment. The configuration of the air blowing apparatus 1A according to the second embodiment is listed below with reference to Figs. 1 and 7. Note that description is provided only for the details of the members and the parts different from those of the first embodiment, not for the members and the parts same as those of the first embodiment. To be more specific, the air blowing apparatus 1A includes: a motor 10A which has a shaft 11 disposed along the central axis J extending vertically; an impeller 50 which is fixed to the shaft 11; an impeller cover 60 which surrounds the upper side and the outer side in the radial direction of the impeller 50 and which has a suction inlet 61 at the center; a motor cover 80 which is located on the lower side of the impeller cover 60 and which is located on the outer side in the radial direction of the motor 10A; and a blower case 82 which is located on the lower side of the impeller cover 60 and which is located on the outer side in the radial direction of the motor cover 80. The motor 10A includes: a rotor unit 20A which includes a lidded cylindrical rotor holder 21A fixed to the shaft 11 and opened upward; a stator unit 30 which faces the rotor unit 20A in the radial direction; and bearings 40 each of which supports the shaft 11 such that the shaft 11 can rotate relative to the stator unit 30. The motor cover 80 has a tubular shape extending in the axial direction and opened downward. The blower case 82 has a tubular shape extending in the axial direction and opened downward. The impeller 50 includes multiple movable vanes 51 disposed in the circumferential direction. The rotor holder 21 includes a rotor holder cylindrical portion 22 and a rotor holder bottom portion 23A which is located on the lower side of the rotor holder cylindrical portion 22. The lower end of the motor cover 80 is located on the upper side in the axial direction of the lower end of the blower case 82, and the motor cover 80 includes a communication path 881 which establishes communication in the radial direction between the inside and the outside of the motor cover 80, the communication path being located on the upper side of the lower end of the motor cover 80.

In the above configuration, the impeller cover 60, the motor cover 80, and the blower case 82 form a flow path which guides downward the air discharged from the impeller 50 to the outside in the air blowing apparatus 1A. Here, in the air blowing apparatus disclosed in Japanese Unexamined Patent Application Publication No. 2003-129995, no motor cover is disposed on the outer side of the motor. For this reason, it is difficult to cool the motor such that trash or water contained in the gas discharged from the impeller will not come into contact with the motor. If the motor cover is disposed on the outer side of the motor, however, the air discharged from the impeller does not come into contact with the motor, which makes it difficult to cool the motor. Thus, it is necessary to fabricate an air blowing apparatus which prevents trash or water contained in the air discharged from the impeller from coming into contact with the motor and at the same time which cools the motor.

In the air blowing apparatus 1A, the lower end of the motor cover 80 is located on the upper side in the axial direction of the lower end of the blower case 82. Thus, most of the air flowing through the flow path formed by the impeller cover 60, the motor cover 80, and the blower case 82 is discharged toward the lower side of the motor cover 80. However, a portion of the air which has flowed through the flow path is discharged to the lower side of the motor cover 80 and then enters the motor cover 80, and after that flows inside the motor cover 80 toward the upper side in the axial direction. This makes it possible to cool the motor 10A. A portion of the air which has cooled the motor 10A passes through the communication path 881 which establishes communication in the radial direction between the inside and the outside of the motor cover 80 and is discharged to the outside of the motor cover 80. Here, if the air blowing apparatus 1A is mounted on a vacuum cleaner, for example, there is a case where it is desirable to raise the temperature of the air discharged from the air blowing apparatus 1A as high as possible. If the air blowing apparatus 1A is mounted, a portion of the air discharged from the impeller 50 can cool the motor 10A as described above, and it is possible to raise the temperature of the air by thermal conduction. Thus, compared to the air discharged from the impeller 50, the temperature is high for the air passing through the communication path 881 and again flowing downward through the flow path located on the outer side of the motor case 80. Therefore, it is possible to discharge air having a higher temperature from the air blowing apparatus 1A.

In addition, the air blowing apparatus 1A further includes, on the lower side of the impeller cover 60, a diffuser 70 which is fixed to the stator unit 30 and at least a portion of which is located on the upper side of the stator unit 30. Moreover, the stator unit 30 includes: a tubular bearing housing 34 which holds the bearings 40 on the inner surface thereof and which holds a stator core 31 on the outer surface thereof; and an attachment plate 35 which is fastened to the bearing housing 34 and which spreads in a direction perpendicular to the shaft 11 on the outer side of the bearing housing 34. The attachment plate 35 is fixed to the diffuser 70.

Since the air blowing apparatus 1A has the configuration described above, the cooling characteristic of the motor 10A further improves. The attachment plate 35 of the second embodiment is a member made of metal. In addition, the attachment plate 35 is connected to a member the temperature of which tends to rise, such as the stator core 31 and the bearings 40. Thus, when the temperature of the motor 10A becomes high, heat is easily conducted to the attachment plate 35 from a member such as the stator core 31 which tends to become a heat source. Then, the heat stored in the attachment plate 35 is cooled by the air flowing inside the motor cover 80. As a result, the cooling characteristic of the motor 10A improves.

In addition, in the second embodiment, the diffuser 70 includes: a diffuser flat plate portion 71 which spreads in the radial direction; and a diffuser tubular portion 74 which extends downward in the axial direction from the outer end of the diffuser flat plate portion 71. The communication path 881 is located on the upper side in the axial direction of the lower end of the diffuser tubular portion 74. Thus, the space formed in the radial direction between the diffuser tubular portion 74 and the motor cover 80 has a negative pressure compared to the inside of the flow path. For this reason, it becomes easier for the air which has cooled the motor 10A to flow through the communication path 881. Therefore, it is possible to effectively cool the motor 10A.

The attachment plate 35 is located on the upper side in the axial direction of the lower end of the diffuser tubular portion 74. Thus, the attachment plate 35 is disposed near the region where the communication path 881 is formed. As a result, the air flowing upward inside the motor case 80 comes into contact with the attachment plate 35 to cool the attachment plate 35, passes through the communication path 881, and then is discharged to the outside of the motor case 80. Thus, the cooling characteristic of the motor 10A further improves.

Furthermore, a portion of the attachment plate 35 forms a portion of the communication path 881. To be more specific, with reference to Figs. 1 and 7, the attachment plate 35 includes an attachment plate flange portion 36, and the attachment plate flange portion 36 protrudes outward from the motor case through the motor cover cutout portion 88. Thus, a portion of the motor cover cutout portion 88 and a portion of the attachment plate flange portion 36 form the communication path 881 which establishes communication through the motor case 80 in the radial direction. As a result, the air flowing upward inside the motor case 80 passes through the communication path 881 along a portion of the attachment plate 35 and is discharged to the outside of the motor case 80. This configuration makes it possible to efficiently cool the attachment plate 35 and more effectively deprive the attachment plate 35 and the stator unit 30 of heat.

As illustrated in Fig. 7, the rotor holder 21A includes a rotor holder through hole 231A in the rotor holder bottom portion 23A penetrating in the axial direction. A plurality of the rotor holder through holes 231A are formed in the rotor holder bottom portion 23A. Each of the rotor holder through holes 231A is a through hole whose longitudinal direction is oriented in the radial direction. A plurality of the rotor holder through holes 231A are formed along the circumferential direction. In the present embodiment, eight rotor holder through holes are formed at equal intervals along the circumferential direction. Note that the rotor holder through hole 231A may have a different shape or arrangement, and the number thereof may be less than eight or more than eight. This makes it possible to efficiently guide the air flowing into the motor case 80 toward the inside of the motor 10A, and to effectively cool parts such as the coil 32 and the stator core 31.

The bearing housing 34 and the attachment plate 35A are both made of metal. This makes it possible to improve the thermal conductivity of the bearing housing 34 and the attachment plate 35A. Hence, it is possible to more effectively cool the stator unit 30.

A lower side balance correcting portion 24A is formed by a recessed portion or the through hole disposed in the outer surface of the rotor holder 21A. The recessed portion or the through hole is formed axially asymmetrically. In the present embodiment, the lower side balance correcting portion 24A is a recessed portion formed in the rotor holder bottom portion 23A. If the recessed portion is formed at a preferable location of the rotor holder bottom portion 23A, it is possible to partially remove the rotor holder 21A, making it possible to correct the balance of the assembly of the impeller 50 and the motor 10A. Note that the lower side balance correcting portion 24A may be a through hole or a cutout, for example, and may be formed at more than one location. In addition, the lower side balance correcting portion 24 may be formed in a rotor holder cylindrical portion 22. In the above configuration, a so-called minus balance makes it possible to correct the balance of the assembly.

### <Third Embodiment>

Next, a description is provided for an air blowing apparatus 1B according to an exemplary third embodiment of the application of the present invention. In the description of the air blowing apparatus 1B according to the third embodiment, the same explanation as that of the air blowing apparatus 1 of the first embodiment is omitted. In addition, the parts and the members having the same configurations as those of the first embodiment may be given the same reference signs as those of the first embodiment.

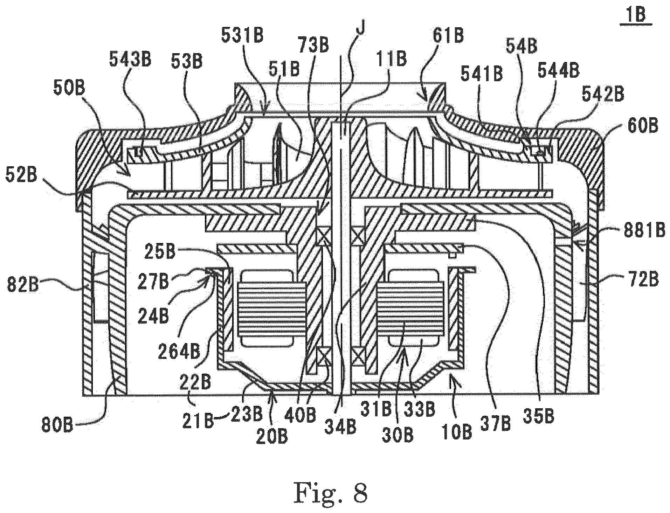

Fig. 8 is a vertical cross-sectional view of the air blowing apparatus 1B according to the third embodiment. The air blowing apparatus 1B includes a motor 10B, an impeller 50B, and an impeller cover 60B. The motor 10B includes a shaft 11B which is disposed along the central axis J extending vertically. The impeller 50B is fixed to the shaft 11B. The impeller cover 60B surrounds the upper side and the outer side in the radial direction of the impeller 50B and includes a suction inlet 61B at the center.

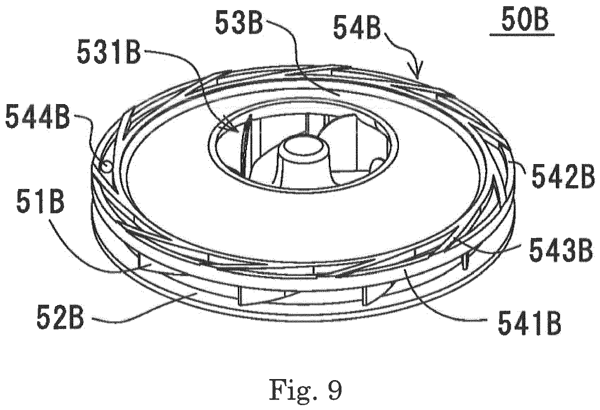

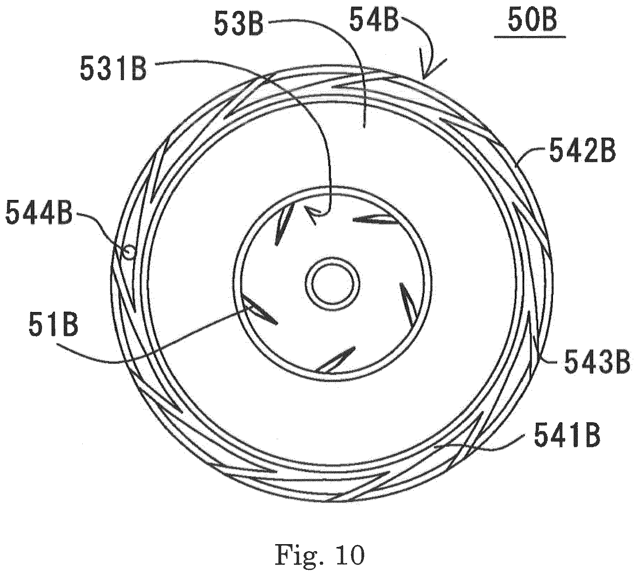

Figs. 9 and 10 are a perspective view and a plan view of the impeller 50B according to the third embodiment, respectively. With reference to Figs. 8, 9, and 10, the impeller 50B includes multiple movable vanes 51B, a lower shroud 52B, and an upper shroud 53B. The multiple movable vanes 51B are disposed in the circumferential direction. In the impeller 50B, the number of movable vanes 51B is ten, including five main vanes having a length long in the radial direction and five auxiliary vanes having a length short in the radial direction disposed alternately. The inner end in the radial direction of each of the main vanes is disposed on the inner side of the inner end in the radial direction of the upper shroud 53B.

The lower shroud 52B is disposed on the lower side of the movable vanes 51B. The inner portion in the radial direction of the lower shroud 52B protrudes upward in the axial direction compared to the outer portion thereof, and the upper surface of the lower shroud 52B is smoothly curved downward and outward toward the outer side in the radial direction. The upper shroud 53B includes a through hole 531B which is disposed higher than the movable vanes 51B and which penetrates in the axial direction.

A blower case 82B is disposed on the lower side of the impeller cover 60B. The blower case 82B has a substantially cylindrical shape extending in the axial direction. The lower end portion of the impeller cover 60B is fixed to the upper end portion of the blower case 82B. The blower case 82B is connected to the motor cover 80B by multiple static vanes 72B disposed in the circumferential direction. The motor cover 80B has a tubular shape extending in the axial direction and opened downward. The blower case 82B, the static vanes 72B, and the motor cover 80B form a single member. The impeller cover 60B, the blower case 82B, and the motor cover 80B form a flow path. To be more specific, the air blowing apparatus 1B further includes the motor cover 80B which is disposed on the lower side of the impeller cover 60B and which is disposed on the outer side in the radial direction of the motor 10B. The multiple static vanes 72B are disposed in the circumferential direction on the outer surface in the radial direction of the motor cover 80B. In other words, the multiple static vanes 72B are disposed in the flow path on the outer side in the radial direction of the motor cover 80B. This makes it possible to guide the air flowing in the flow path smoothly downward. Thus, the air discharged from the impeller 50B is guided into the flow path along the inner surface of the impeller cover 60B and then smoothly discharged downward in the axial direction. As opposed to the case of the air blowing apparatus 1, the air flows straightly in the flow path in the air blowing apparatus 1B. For this reason, the flow rate does not easily reduce, improving the air blow efficiency of the air blowing apparatus 1B.

The upper shroud 53B includes a first raised portion 541B and a second raised portion 542B. Each of the first raised portion 541B and the second raised portion 542B is an annular portion. The first raised portion 541B protrudes upward from the upper surface of the upper shroud 53B, and extends in the circumferential direction. The second raised portion 542B protrudes upward from the upper surface of the upper shroud 53B, and extends in the circumferential direction. The second raised portion 542B is disposed on the outer side in the radial direction of the first raised portion 541B.

The clearance in the axial direction between the lower surface of the impeller cover 60B and at least one of the first raised portion 541B and the second raised portion 542B is smaller than the clearance in the axial direction between the lower surface of the impeller cover 60B and the upper shroud 53B on the inner side in the radial direction of the first raised portion 541B. In other words, the clearance in the axial direction between the lower surface of the impeller cover 60B and the upper surface of the upper shroud 53B is small in a region where the first raised portion 541B or the second raised portion 542B is formed. This makes it possible to obtain a labyrinth effect between the impeller cover 60B and the first raised portion 541B or the second raised portion 542B and to reduce the risk that the air discharged from the impeller 50B could flow into the clearance between the impeller cover 60B and the upper shroud 53B. As a result, the efficiency of the air blowing apparatus improves.

The upper end of the first raised portion 541B is disposed higher than the upper end of the second raised portion 542B. In other words, the first raised portion 541B protrudes higher than the second raised portion 542B. This makes it possible to reduce the clearance in the axial direction between the first raised portion 541B and the lower surface of the impeller cover 60B. Hence, the labyrinth effect improves. In addition, it is possible to reduce the weight of the outer portion in the radial direction of the impeller 50B compared to the case where the second raised portion 542B more protrudes upward. As a result, the rotational balance is enhanced and the vibration of the impeller 50B is reduced. Additionally, the second raised portion 542B is disposed on the outer edge in the radial direction of the upper shroud 53B. This makes it possible to more reduce the risk that the air discharged from the impeller 50B could flow onto the upper surface of the upper shroud 53B.

The upper shroud 53B includes multiple upper shroud wall portions 543B which are disposed in the circumferential direction and which connect the first raised portion 541B and the second raised portion 542B together. This improves the rigidity of the upper shroud 53B. In addition, the inner end in the radial direction of each of the upper shroud wall portions 543B is located in front of the corresponding outer end in the radial direction of the upper shroud wall portion 543B in the rotational direction R of the impeller 50B. Thus, when the impeller 50B rotates, the air which has flowed onto the upper surface of the impeller 50B is discharged by the upper shroud wall portions 543B outward in the radial direction. Hence, the labyrinth function in the clearance between the upper shroud 53B and the lower surface of the impeller cover 60B improves.

The height in the axial direction of the upper end of the upper shroud wall portion 543B is equal to the height in the axial direction of the upper end of the first raised portion 541B. Thus, in the impeller 50B, the upper shroud wall portion 543B and the first raised portion 541B have the same height, and both of them are higher than the second raised portion 542B. As a result, if the upper shroud wall portion 543B is higher, it is possible to more efficiently discharge the air in the space formed between the impeller cover 60B and the upper surface of the upper shroud 53B to the outside.

In the air blowing apparatus 1B, the number of upper shroud wall portions 543B is 11, and the number of movable vanes 51B is 10. In other words, the number of upper shroud wall portions 543B and the number of movable vanes 51B are different from each other. Thus, the number of hissing noises produced from the movable vanes 51B differs from the number of hissing noises produced from the upper shroud wall portions 543B over the period of one rotation of the impeller 50B about the central axis J. As a consequence, it is possible to reduce the risk that the hissing noise of the movable vanes 51B and the hissing noise of the upper shroud wall portion 543B occur at the same time to produce a loud noise. Particularly in the case of the air blowing apparatus 1B, the number of upper shroud wall portions 543B and the number of movable vanes 51B are mutually prime. Thus, it is possible to further reduce the risk that the hissing noise by the upper shroud wall portions 543B and the hissing noise by the movable vanes 51B occur at the same time during the period of one rotation of the impeller 50B, making it possible to more suppress noise. In addition, at least one of the upper shroud wall portions 543B is disposed between adjacent movable vanes 51B in the circumferential direction. To put it differently, at least one of the outer ends in the radial direction of the upper shroud wall portions 543B is disposed in the circumferential direction between the outer ends in the radial direction of adjacent movable vanes 51B. Hence, the balance of the upper shroud 53B is enhanced and the rigidity as a whole improves in a well balanced manner. In addition, when the impeller 50B rotates, hissing noise by the upper shroud wall portions 543B and hissing noise by the movable vanes 51B are prevented from occurring at the same time. Therefore, it is possible to reduce the noise by the impeller 50B.

The impeller 50B includes an upper side balance correcting portion 54B included in the upper shroud 53B. To be more precise, the upper shroud 53B includes multiple upper side balance correcting portions 54B formed by the first raised portion 541B, the second raised portion 542B, and the multiple upper shroud wall portions 543B. In other words, each of the upper side balance correcting portion 54B is a space which is formed by the first raised portion 541B, the second raised portion 542B, the shroud wall portions 543B, and the upper surface of the upper shroud 53B and which is opened upward in the axial direction. At least one of the upper side balance correcting portions 54B is provided with a weight 544B. Thus, it is possible to correct the dynamic balance of the impeller 50B.

Note that the dynamic balance of the impeller 50B may be corrected by a different method. For example, the dynamic balance of the impeller 50B may be corrected by cutting at least one of the first raised portion 541B, the second raised portion 542B, and the upper shroud wall portion 543B. In other words, the shape of the upper side balance correcting portion 54B may be asymmetric with respect to the central axis J. This makes it possible to correct the dynamic balance of the impeller 50B even in the case where members such as the weight 544B are lacked.

The motor 10B includes a stator unit 30B, a rotor unit 20B, and bearings 40B. The stator unit 30B faces the rotor unit 20B in the radial direction. The stator unit 30B includes a bearing housing 34B, a stator core 31B which is fixed to the outer surface in the radial direction of the bearing housing 34B, and a circuit board 37B which is fixed to the outer surface in the radial direction of the bearing housing 34B above the stator core 31B. Lead wire electrically connected to the circuit board 37B is wound around the stator core 31B using an insulator (not illustrated). In this way, a coil 33B is formed. The bearings 40B are fixed to the inner surface of the bearing housing 34B. Each of the bearings 40B supports the shaft 11B such that the shaft 11B can rotate relative to the stator unit 30B. The upper end portion of the bearing housing 34B is fixed to the motor cover 80B.

The stator unit 30B includes: the tubular bearing housing 34B which holds the bearings 40B on the inner surface thereof; and an attachment plate 35B which spreads in a direction perpendicular to the shaft 11B on the outer side of the bearing housing 34B. The attachment plate 35B is fixed to the motor cover 80B. This makes it possible to fix the motor 10B of an outer rotor type to the motor cover 80B. In other words, in the case of the motor 10B of an outer rotor type, it is impossible to fix the rotor holder 21B to the motor cover 80B if a rotor holder bottom portion 23B to be described later is disposed higher than the stator core 31B. However, in the air blowing apparatus 1B, it is possible to fix the attachment plate 35B to the motor cover 80B because the rotor holder bottom portion 23B is disposed lower than the stator core 31B, and the bearing housing 34B and the attachment plate 35B are disposed higher than the stator core 31B. Note that although the bearing housing 34B and the attachment plate 35B form a single member, they may be separate members. In addition, although the attachment plate 35B is fixed to the motor cover 80B by press fitting, a different fixing method may be employed.

The motor cover 80B includes a motor cover through hole 73B penetrating in the axial direction. The motor cover through hole 73B is a circular hole centered at the central axis J. At least a portion of the bearing housing 34B is fitted to the motor cover through hole 73B. In detail, the attachment plate 35B formed on the upper end portion of the bearing housing 34B is fixed to the inner end portion in the radial direction of the motor cover 80B. This makes it possible to fix the bearing housing 34B and the motor cover 80B coaxially with the central axis J.

The motor 10B includes a circuit board 37B which is disposed on the lower side of the attachment plate 35B and on the upper side of the rotor holder 21B. The circuit board 37B is fixed to the outer side in the radial direction of the bearing housing 34B and is disposed in the axial direction between the lower surface of the attachment plate 35B and the upper end of the rotor holder 21B. The circuit board 37B includes a lead wire (not illustrated) electrically connected to an external power supply. The electric current supplied through the lead line is supplied to the coil via the circuit board 37B. The motor cover 80B includes a motor cover through hole 881B through which the lead line is inserted at at least one location in the circumferential direction. This makes it possible to extend the lead line to the outside of the motor cover 80B.

The rotor unit 20B includes a lidded cylindrical rotor holder 21B which is fixed to the shaft 11B and which is opened upward. The rotor holder 21B includes: a rotor holder bottom portion 23B which is fixed to the shaft 11B; and a substantially cylindrical rotor holder cylindrical portion 22B which extends upward from the outer side in the radial direction of the rotor holder bottom portion 23B. The rotor holder bottom portion 23B is disposed on the lower side of the rotor holder cylindrical portion 22B. A substantially cylindrical magnet 25B is fixed to the inner surface of the rotor holder cylindrical portion 22B.

The rotor holder cylindrical portion 22B further includes a rotor holder flange portion 27B which extends outward in the radial direction from the upper end portion of the rotor holder cylindrical portion 22B. The rotor holder flange portion 27B forms a lower side balance correcting portion 24B. In other words, the rotor holder 21B includes the lower side balance correcting portion 24B. Thus, the lower side balance correcting portion 24B is formed on the outer side in the radial direction of the motor 10B. In other words, the rotor holder 21B includes: the rotor holder cylindrical portion 22B; the rotor holder bottom portion 23B which is disposed on the lower side of the rotor holder cylindrical portion 22B; and the lower side balance correcting portion 24B which is included in at least one of the rotor holder cylindrical portion 22B and the rotor holder bottom portion 23B. A weight 264B, for example, is fixed to the lower side balance correcting portion 54B. This makes it possible to correct the rotational balance of the motor 10B. Moreover, if both the upper side balance correcting portion 54B and the lower side balance correcting portion 24B correct the rotational balance, it is possible to correct the two-plane balance of the single rotating body made up of the motor 10B, the shaft 11B, and the impeller 50B.

Note that although the lower side balance correcting portion 24B is formed using a motor of an outer rotor type in the air blowing apparatus 1B, the motor 10B may be of an inner rotor type. In addition, the lower side balance correcting portion 24B may be formed by a portion other than the rotor holder flange portion 27B. For example, the dynamic balance of the rotor unit 20B may be corrected by partially cutting the rotor holder cylindrical portion 22B to reduce the weight of that portion.

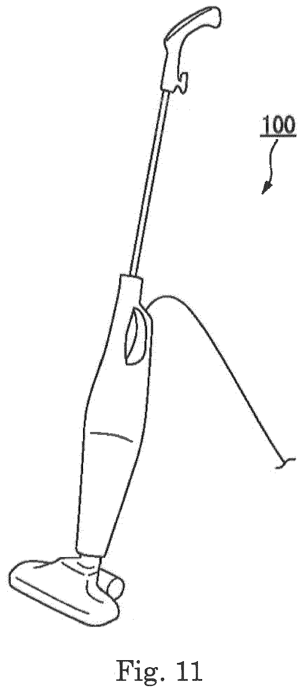

Fig. 11 is a perspective view illustrating a vacuum cleaner 100. The vacuum cleaner 100 includes the air blowing apparatus described above. This makes it possible to improve the air blow efficiency of the air blowing apparatus mounted on the vacuum cleaner 100. The vacuum cleaner

Exemplary embodiments of the present invention have been described above. However, the constituents, combinations thereof, and the like in the first embodiment and the second embodiment are examples. It is possible to add, omit, substitute, and modify the constituents within the scope not departing from the gist of the present invention. In addition, the present invention is not limited to the embodiments.

### Reference Signs List

J central axis
R rotational direction of impeller
1, 1A, 1B air blowing apparatus
10, 10A, 10B motor
11, 11B shaft
20, 20A, 20B rotor unit
21, 21A, 21B rotor holder
22, 22B rotor holder cylindrical portion
23, 23A, 23B rotor holder bottom portion
231A, 231B rotor holder through hole
24, 24A, 24B lower side balance correcting portion
25, 25B magnet
26 annular member
261 annular member bottom portion
262 annular member tubular portion
263 annular member wall portion
264, 264B weight
30, 30B stator unit
31, 31B stator core
32 insulator
33, 33B coil
34, 34B bearing housing
341 fitting portion
35, 35A, 35B attachment plate
36, 36A attachment plate flange portion
37, 37B circuit board
38, 38B lead line
40, 40B bearing
50, 50B impeller
51, 51B movable vane
52, 52B lower shroud
521 through hole
522 lower shroud rib
53, 53B upper shroud
531, 531B through hole
54, 54B upper side balance correcting portion
541, 541B first raised portion
542, 542B second raised portion
543, 543B upper shroud wall portion
544, 544B weight
60, 60B impeller cover
61, 61B suction inlet
62 impeller cover upper edge portion
63 impeller cover slope
64 impeller cover raised portion
65 impeller cover tubular portion
66 impeller cover guide portion
70 diffuser
71 diffuser flat plate portion
72 upper side static vane
72B static vane
73 diffuser through hole
73B motor cover through hole
74 diffuser tubular portion
75 middle cover
80, 80B motor cover
81 lower side static vane
82, 82B blower case
83 blower case outer tubular portion
84 blower case connection portion
85 blower case inner tubular portion
86 motor cover tubular portion
87 lead line holder
88 motor cover cutout portion
881 communication path
881B motor cover through hole
100 vacuum cleaner

## Claims

1. An air blowing apparatus comprising:
a motor which includes a shaft disposed along a central axis extending vertically;
an impeller which is fixed to the shaft; and
an impeller cover which surrounds an upper side and an outer side in a radial direction of the impeller and which includes a suction inlet at a center, wherein
the impeller includes
a plurality of movable vanes which are disposed in a circumferential direction,
a lower shroud which is disposed on the lower side of the movable vanes,
an upper shroud which is disposed on the upper side of the movable vanes and which includes a through hole penetrating in an axial direction,
the upper shroud includes
a first raised portion which protrudes upward from an upper surface of the upper shroud and which extends in the circumferential direction,
a second raised portion which is disposed on the outer side in the radial direction of the first raised portion, which protrudes upward from the upper surface of the upper shroud, and which extends in the circumferential direction, and
a clearance in the axial direction between a lower surface of the impeller cover and at least one of the first raised portion and the second raised portion is smaller than a clearance in the axial direction between the lower surface of the impeller cover and the upper shroud on the inner side in the radial direction of the first raised portion.

2. The air blowing apparatus according to claim 1, wherein
the second raised portion is disposed on an outer edge in the radial direction of the upper shroud.

3. The air blowing apparatus according to claim 1 or 2, wherein
an upper end of the first raised portion is disposed higher than an upper end of the second raised portion.

4. The air blowing apparatus according to any one of claims 1 to 3, wherein
the upper shroud includes a plurality of upper shroud wall portions which are disposed in the circumferential direction and which connect the first raised portion and the second raised portion together.

5. (Dependent. Air Discharge) The air blowing apparatus according to claim 4, wherein
an inner end in the radial direction of each of the upper shroud wall portions is disposed in front of a corresponding outer end in the radial direction of the upper shroud wall portion in a rotational direction of the impeller.

6. The air blowing apparatus according to claim 4 or 5, wherein
a height in the axial direction of an upper end of each of the upper shroud wall portions is equal to a height in the axial direction of the upper end of the first raised portion.

7. The air blowing apparatus according to any one of claims 4 to 6, wherein
the number of the upper shroud wall portions and the number of the movable vanes are different from each other.

8. The air blowing apparatus according to any one of claims 4 to 7, wherein
at least one of the upper shroud wall portions is disposed between the adjacent movable vanes in the circumferential direction.

9. The air blowing apparatus according to any one of claims 4 to 8, wherein
the upper shroud includes a plurality of upper side balance correcting portions which are formed by the first raised portion, the second raised portion, and the plurality of upper shroud wall portions, and
a shape of each of the upper side balance correcting portions is asymmetric with respect to the central axis.

10. The air blowing apparatus according to any one of claims 4 to 8, wherein
the upper shroud includes a plurality of upper side balance correcting portions which are formed by the first raised portion, the second raised portion, and the plurality of upper shroud wall portions, and
at least one of the upper side balance correcting portions is provided with a weight.

11. The air blowing apparatus according to any one of claims 8 to 10, wherein
a lower side balance correcting portion is formed on the outer side in the radial direction of the motor.

12. The air blowing apparatus according to claim 11, wherein
the motor includes
a rotor unit which includes a lidded cylindrical rotor holder fixed to the shaft and opened upward,
a stator unit which faces the rotor unit in the radial direction, and
a bearing which rotatably supports the shaft relative to the stator unit, and
the rotor holder includes the lower side balance correcting portion.

13. A vacuum cleaner comprising the air blowing apparatus according to any one of claims 1 to 12.
